(19) Europäisches Patentamt
European Patent Office
Office européen des brevets

(11) EP 4 393 970 A1

(12) **EUROPEAN PATENT APPLICATION**

(43) Date of publication:
**03.07.2024 Bulletin 2024/27**

(21) Application number: **22307054.1**

(22) Date of filing: **28.12.2022**

(51) International Patent Classification (IPC):
***C08F 220/38*** *(2006.01)* ***C08L 33/06*** *(2006.01)*
***C08F 6/00*** *(2006.01)*

(52) Cooperative Patent Classification (CPC):
(C-Sets available)
**C08F 220/387; C04B 28/02; C08F 6/006;**
**C08L 33/064; C08L 33/066; C09J 125/14;**
C04B 2111/00482; C04B 2111/00637;
C04B 2111/27 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
- **SAIJA, Leo Mario**
  **42011 Bagnolo in Piano (IT)**
- **LUGLI, Mario**
  **42022 Boretto (IT)**
- **PREMOLI, Andrea**
  **42022 Boretto (IT)**
- **PERINO, Luca**
  **42022 Boretto (IT)**
- **AMADEI, Umberto**
  **42022 Boretto (IT)**

(74) Representative: **Arkema Patent**
**Arkema France**
**DRD-DPI**
**420, rue d'Estienne d'Orves**
**92705 Colombes Cedex (FR)**

# (54) COMPOSITION COMPRISING AN AQUEOUS POLYMER DISPERSION AND A HYDRAULIC BINDER

(57) The present invention relates to a composition comprising A) an aqueous polymer dispersion which has been in contact with a specific redox system during and/or after polymerization; and B) a hydraulic binder. It further relates to a process for obtaining the composition and its use in the manufacture of a coating, an adhesive, a mortar, a putty or a sealant, in particular a waterproofing cementitious coating having low tackiness and high impermeability to water.

EP 4 393 970 A1

(52) Cooperative Patent Classification (CPC): (Cont.)

C-Sets
**C04B 28/02, C04B 24/2641, C04B 2103/40,**
**C04B 24/06, C04B 24/04, C04B 18/08,**
**C04B 18/141, C04B 22/064, C04B 2103/0088,**
**C04B 22/143;**
**C08F 6/006, C08L 25/14;**
**C08F 6/006, C08L 33/064;**
**C08F 6/006, C08L 33/066;**
**C09J 125/14, C08K 3/34;**
**C09J 133/064, C08K 3/34;**
**C09J 133/066, C08K 3/34;**
C08F 220/1808, C08F 212/08, C08F 220/1804,
C08F 220/20, C08F 220/06, C08F 220/387

## Description

## FIELD OF THE INVENTION

The present invention relates to a composition comprising A) an aqueous polymer dispersion which has been in contact with a specific redox system during and/or after polymerization; and B) a hydraulic binder. It further relates to a process for obtaining the composition and its use in the manufacture of a coating, an adhesive, a mortar, a putty or a sealant, in particular a waterproofing cementitious coating having low tackiness and high impermeability to water.

## TECHNICAL BACKGROUND

Two-component cementitious waterproofing coatings are used as a support and sealing layer, for example underneath tiles in bathrooms, on terraces, in swimming pools and water tanks, *inter alia.* These coatings are generally made from compositions comprising a polymeric binder and a hydraulic binder such as a cementitious hydraulic binder. The polymeric binder itself is typically formed by emulsion polymerization from a mixture of ethylenically unsaturated monomers comprising: (a) alkyl (meth)acrylates, (b) vinyl aromatic monomers, (c) hydroxy-containing (meth)acrylate, (d) an acid monomer which may be (meth)acrylic acid or itaconic acid optionally in admixture with sodium 2-acrylamido-2-methyl propanesulfonate, and (e) optionally, (meth)acrylamide. The monomers are usually gradually added to the reaction medium along with water and one or more surfactants and polymerized in the presence of an initiator. The resulting polymer is then subjected to a post-polymerization treatment with a chase, generally a redox system, which is used to reduce the residual monomer content.

Redox systems that have been used as a chase so far include:

- tert-butyl hydroperoxide (TBHP)/Bruggolite® FF6 M (a mixture of disodium salts of 2-hydroxy-2-sulfinatoacetic acid and 2-hydroxy-2-sulfonatoacetic acid at 70% and sodium sulfite at 30%) as disclosed in US2020/0277421
- TBHP/sodium bisulfite as disclosed in US2018/0179108,
- TBHP/sodium sulfoxylate formaldehyde as disclosed in US6423805
- TBHP/(iso)ascorbic acid as disclosed in US2017/0226013 and US2018/0327310

To maintain water tightness, the membranes obtained from these polymers must be flexible enough in wet conditions to avoid the formation of cracks and provide crack bridging due to mechanical stress. They should thus provide high elongation at break under wet conditions. In addition these membranes should not be sticky when applied to the substrate. The inventors have shown that finding a polymer dispersion able to provide the cement membrane with both properties was a challenge, especially in the case where the polymer is deprived of any (meth)acrylamide monomer.

(Meth)acrylamide is normally used as a comonomer to achieve a desired balance of tensile and elongation properties in cement membranes. However, the strong alkali conditions cause the amide group to hydrolyze and release odorous and irritating ammonia, upon mixing with cement. It would thus be desirable to provide a polymer dispersion free of (meth)acrylamide.

Surprisingly, Applicant has found that the use of a specific redox system during and/or after polymerization leads to an aqueous polymer dispersion that can be used to prepare a composite material having high flexibility when wet, low tackiness and high water impermeability and does not involve the use of (meth)acrylamide.

## SUMMARY OF THE INVENTION

A first object of the present invention is a composition comprising:

A) an aqueous polymer dispersion; and
B) a hydraulic binder;

wherein the aqueous polymer dispersion is obtained by emulsion polymerization of a monomeric composition comprising:

- ethylenically unsaturated monomers;
- at least one surfactant; and
- at least one initiator;

and the aqueous polymer dispersion comprises a residue of a reducing agent selected from polyunsaturated carboxylic acids, hydroxylated carboxylic acids and mixtures thereof.

Another object of the present invention is a process for the preparation of a composition comprising the following

steps:

i) preparing an aqueous polymer dispersion by emulsion polymerization of a monomeric composition comprising

- ethylenically unsaturated monomers;
- at least one surfactant; and
- at least one initiator;

ii) adding a chase to the aqueous polymer dispersion obtained in step i) as a post-polymerization treatment;
iii) mixing the aqueous polymer dispersion obtained in step ii) with a hydraulic binder; wherein the initiator of step i) and/or the chase of step ii) comprises a redox system comprising a peroxide and a reducing agent selected from polyunsaturated carboxylic acids, hydroxylated carboxylic acids and mixtures thereof.

The invention also relates to the use of the composition according to the invention in the preparation of a composite material selected from a coating, an adhesive, a mortar, a putty or a sealant, preferably a cementitious waterproofing coating.
The invention also relates to a composite material, preferably a cementitious waterproofing coating, obtained with the composition according to the invention.
The invention also relates to the use of a redox system for increasing the impermeability and/or reducing the tackiness of a composite material obtained from an aqueous polymer dispersion and a hydraulic binder, wherein the redox system comprises a peroxide and a reducing agent selected from polyunsaturated carboxylic acids, hydroxylated carboxylic acids and mixtures thereof.

## DETAILED DESCRIPTION

### Definitions

As used herein, the term "(meth)acrylate" means methacrylate or acrylate. In one embodiment, the (meth)acrylate is an acrylate. In another embodiment the (meth)acrylate is a methacrylate.
As used herein, the term "aqueous dispersion" means a polyphasic system having a dispersed organic phase and a continuous aqueous phase.
As used herein, the term "substantially free of organic solvents" means less than 2%, preferably less than 1 %, more preferable 0% by weight of organic solvent based on the weight of the aqueous phase.
As used herein, the term "aliphatic" refers to a monomer that does not comprise an aromatic group. Aliphatic monomers may be linear or branched, cyclic or acyclic.
As used herein the term "ethylenically unsaturated monomer" means a monomer that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in an acryloyl ($-C(=O)-CH=CH_2$), methacryloyl ($-C(=O)-C(CH_3)=CH_2$) or vinyl ($-CH=CH_2$) group. The carbon-carbon double bonds of a phenyl ring are not considered as polymerizable carbon-carbon double bonds.
As used herein, the term "vinyl aromatic monomer" refers to a monomer that contains a carbon-carbon double bond in alpha position to an optionally substituted aromatic ring. Examples of aromatic rings include optionally substituted rings selected from benzene, toluene, xylene, biphenyl, indene, naphthalene, anthracene and mixtures thereof.
As used herein the term "acidic group" means a group that can be anionised through loss of a proton. For example, a carboxylic acid functional group may form a carboxylate anion under basic conditions.
As used herein the term "phosphorus-based acid monomers" means a monomer comprising an acidic group that comprises a phosphorus atom.
As used herein the term "sulfur-based acid monomers" means a monomer comprising an acidic group that comprises a sulfur atom.
As used herein, the term "silane group" means a group comprising a carbon-silicon bond (C-Si). The silane group may further comprise a silicon-oxygen bond (Si-O).

### Composition

The composition of the invention comprises two components that are intended to be mixed with one another shortly before use by the end-user. Such a composition is known in the art as a bicomponent composition or a 2K composition.
The composition of the invention comprises:

A) an aqueous polymer dispersion; and
B) a hydraulic binder.

The aqueous polymer dispersion and the hydraulic binder may be as defined below.
In particular, the composition of the invention may comprise:

- from 10 to 90%, in particular from 20 to 75%, more particularly from 30 to 60%, by weight of component A);
- from 10 to 90%, in particular from 25 to 80%, more particularly from 40 to 70%, by weight of component B);

based on the total weight of the composition.
The weight ratio of solids in component A) to solids in component B) may range from 0.1:1 to 2.5:1, preferably from 0.5:1 to 1.5:1.

Aqueous polymer dispersion

The composition of the present invention comprises an aqueous polymer dispersion, also referred to as component A).
The aqueous polymer dispersion comprises polymer particles dispersed in an aqueous phase.
The aqueous phase is a liquid comprising water. Said liquid may further comprise organic solvents, such as, for example, ethanol. However, the aqueous phase is preferably substantially free of organic solvents.
The organic phase may be a monomer phase, a polymer phase or a mixture thereof. Said organic phase may further comprise other liquid, solid or semi-solid components, such as one or more surfactants, plasticizers, chain transfer agents and buffering agents. A system having a solid or semi-solid organic phase dispersed in water may be referred to as a colloidal suspension. In the field of polymers, such colloidal suspensions are also inaccurately referred to as emulsions, and the process for preparing them is called emulsion polymerization. Another term commonly used for characterizing an aqueous dispersion of polymer particles is "latex".
The solids content of the aqueous dispersion may be in the range of 30 to 70% by weight, in particular 40 to 65%, more particularly 50 to 60% by weight.
The polymer particles may exhibit a volume average particle size of 50 to 1000 nm, in particular 100 to 500 nm, more particularly 150 to 400 nm. The volume average particle size may be determined by dynamic light scattering or laser diffraction.
According to a particular embodiment, the polymer particles may exhibit a bimodal or polymodal particle size distribution. Such a distribution may advantageously be used when the solids content of the aqueous dispersion is higher than 60% in order to reduce the viscosity of the aqueous dispersion. For example, it is possible to create a new generation of particles by adding a seed. Further conditions for a polymodal distribution can be found in WO 02/092637.
The polymer particles may exhibit a glass transition temperature (Tg) of -40 to 30°C, in particular -30 to 25°C, more particularly -20 to 20°C, even more particularly -20 to 5°C. The Tg may be determined by DSC according to the method described herein.
The polymer particles are obtained by emulsion polymerization of a monomeric composition and subsequent post-polymerization treatment with a reducing agent selected from polyunsaturated carboxylic acids and hydroxylated carboxylic acids.
Any type of standard emulsion polymerization process may be used to obtain the polymer particles. For example, a pre-emulsified monomeric composition comprising ethylenically unsaturated monomers may be added to an aqueous solution comprising an initiator as detailed below.

*Residue of reducing agent*

The aqueous polymer dispersion of component A) comprises a residue of a reducing agent selected from polyunsaturated carboxylic acids and hydroxylated carboxylic acids. The residue of said reducing agent results from the use of a specific redox system during and/or after polymerization of the aqueous polymer dispersion. Said redox system comprises a peroxide and a reducing agent selected from polyunsaturated carboxylic acids and hydroxylated carboxylic acids. In particular, the residue of the reducing agent may correspond to a fragment of the reducing agent and/or to residual (i.e. unreacted) reducing agent that is present in the aqueous polymer dispersion. A fragment of the reducing agent may be attached to a polymer chain of the polymer particles.
Accordingly, the polymer particles may be contacted with the specific reducing agent during polymerization (i.e. during formation of the polymer particles) and/or after polymerization (i.e in a post-polymerization treatment carried out after the polymer particles have been formed by emulsion polymerization).
In a preferred embodiment, the residue of said reducing agent results from the use of a specific redox system

after polymerization of the aqueous polymer dispersion.

The reducing agent of the redox system used during and/or after polymerization is selected from polyunsaturated carboxylic acids and hydroxylated carboxylic acids. A polyunsaturated carboxylic acid may be a compound bearing at least two ethylenic unsaturations and at least one carboxylic acid (-COOH) group. A hydroxylated carboxylic acid is a compound bearing at least one hydroxyl (-OH) group at least one carboxylic acid (-COOH) group. Preferably, the reducing agent comprises at least two hydroxyl groups at least two carboxylic acid group.

In particular, the reducing agent may be selected from tartaric acid, sorbic acid, glycolic acid and mixtures thereof, more particularly tartaric acid.

The peroxide of the redox system used during and/or after polymerization may be any peroxide known the art. A peroxide may be defined as a compound comprising an oxygen-oxygen single bond. The peroxide may be selected from a persulfate, hydrogen peroxide (HzOz), an organic hydroperoxide, a peracid, or a mixture thereof.

Examples of suitable persulfates include ammonium persulfate, potassium persulfate, sodium persulfate and mixtures thereof.

Examples of suitable organic peroxides include cumene hydroperoxide, t-butyl hydroperoxide, acetyl peroxide, benzoyl peroxide, lauroyl peroxide and mixtures thereof.

Examples of suitable peracids include peracetic acid, perbenzoic acid and mixtures thereof.

In particular, the peroxide of the redox system used during and/or after polymerization is hydrogen peroxide.

The molar ratio of the peroxide to the reducing agent in the redox system used during and/or after polymerization may range from 1:3 to 3:1.

In addition, the redox system used during and/or after polymerization may represent from 0.2 to 2% by weight, relative to the total weight of the polymer (which is based on the total weight of the monomers in the monomeric composition).

The number of equivalents of reducing agent in the redox system used during and/or after polymerization is calculated by dividing the amount by weight of reducing agent by its equivalent weight. The equivalent weight of a reducing agent corresponds to its molecular weight divided by the variation of the oxidation number of each atom reacting with the peroxide, going from their original oxidation number to the highest one possible.

For example, tartaric acid contains two reactive hydroxyl groups per molecule and after reacting with the peroxide, the oxidation number of one of the oxygen atoms varies from +1 to +2. Accordingly, the equivalent weight of tartaric acid corresponds to its molecular weight.

The total number of equivalents of peroxide in the redox system used during and/or after polymerization is calculated by dividing the amount by weight of peroxide by its equivalent weight. The equivalent weight of a peroxide corresponds to its molecular weight divided by the variation of the oxidation number of each reactive oxygen atom. A peroxide has two reactive oxygen atoms per molecule and after reacting with the reducing agent, the oxidation number of each oxygen atom varies from -1 to -2. Accordingly, the equivalent weight of a peroxide is its molecular weight divided by 2.

The total amount of reducing agent in the redox system used during and/or after polymerization may be from 0.005 to 1, or from 0.01 to 1, or from 0.02 to 0.9, or from 0.03 to 0.8, or from 0.04 to 0.7, or from 0.05 to 0.6, or from 0.06 to 0.5 meq reducing agent/g of polymer.

The amount of peroxide in the redox system used during and/or after polymerization may be from 0.005 to 1, or from 0.01 to 1, or from 0.02 to 0.9, or from 0.04 to 0.8, or from 0.06 to 0.7, or from 0.08 to 0.6, or from 0.1 to 0.5 meq peroxide/g of polymer.

*Ethylenically unsaturated monomers*

The polymer of the aqueous dispersion of component A) is based on ethylenically unsaturated monomers. Accordingly, the polymer is obtained from a monomeric composition comprising ethylenically unsaturated monomers as defined below. In other words, the polymer comprises polymerized units derived from ethylenically unsaturated monomers.

The ethylenically unsaturated monomers may comprise monomer a). Monomer a) comprises or consists of one or more C1-C12 alkyl (meth)acrylates. As used herein, the term "C1-C12 alkyl (meth)acrylate" means an alkyl ester of (meth)acrylic acid wherein the alkyl is unsubstituted and bears from 1 to 12 carbon atoms.

Monomer a) may comprise or consist of one or more monomers selected from methyl (meth)acrylate, ethyl (meth)acrylate, propyl (meth)acrylate, n-butyl, sec-butyl, i-butyl or tert-butyl (meth)acrylate, 2-ethylhexyl (meth)acrylate, 2-octyl (meth)acrylate, isooctyl (meth)acrylate, nonyl (meth)acrylate, isononyl (meth)acrylate, decyl (meth)acrylate, isodecyl (meth)acrylate, 2-propylheptyl (meth)acrylate, lauryl (meth)acrylate and mixtures thereof.

In a preferred embodiment, monomer a) may comprise or consist of a mixture of at least one C4-C12 alkyl acrylate and at least one C1-C4 alkyl methacrylate. In particular, monomer a) may comprise or consist of a mixture of:

- at least one C4-C12 alkyl acrylate selected from n-butyl acrylate, 2-ethylhexyl acrylate, 2-octyl acrylate, isooctyl acrylate, nonyl acrylate, isononyl acrylate, decyl acrylate, isodecyl acrylate, 2-propylheptyl acrylate and mixture thereof; and
- at least one C1-C4 alkyl methacrylate which is selected from methyl methacrylate and n-butyl methacrylate.

The total amount of monomer a) may be at least 40%, at least 45%, at least 50%, at least 55% or at least 60%, by weight based on the total weight of the ethylenically unsaturated monomers. In one embodiment, the total amount of monomer a) may be from 40 to 98%, from 40 to 95%, from 45 to 95%, from 50 to 90%; from 55 to 85% or from 60 to 80%, by weight based on the total weight of the ethylenically unsaturated monomers.

The total amount of C4-C12 alkyl acrylate in monomer a) may be at least 60%, at least 65%, at least 70%, at least 75% or at least 80%, by weight based on the total weight of monomer a). In one embodiment, the total amount of C4-C12 alkyl acrylate in monomer a) may be from 60 to 100%, from 65 to 99%, from 70 to 98%; from 75 to 95%; from 80 to 95% or from 85 to 90%, by weight based on the total weight of monomer a).

The ethylenically unsaturated monomers may comprise monomer b). Monomer b) comprises or consists of one or more vinyl aromatic monomers.

Monomer b) may comprise or consist of one or more monomers selected from styrene, alphamethylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof.

In particular, monomer b) comprises or consists of styrene.

The total amount of monomer b) may be from 0 to 60%, from 5 to 60%, from 5 to 45%, from 10 to 40%, from 20 to 40% or from 25 to 40%, by weight based on the total weight of the ethylenically unsaturated monomers.

In one embodiment, the ethylenically unsaturated monomers may be substantially free of monomer b). In particular, the ethylenically unsaturated monomers may comprise less than 1%, less than 0.5%, less than 0.1% or even 0% by weight, of monomer b) based on the total weight of the ethylenically unsaturated monomers. For example, the ethylenically unsaturated monomers comprise may comprise from 0 to less than 1%, from 0 to 0.5%, from 0 to 0.1%, or even 0% by weight of monomer b) based on the total weight of the ethylenically unsaturated monomers.

In another embodiment, the ethylenically unsaturated monomers may comprise at least 10%, at least 15%, at least 20%, at least 25% or at least 30%, by weight of monomer b) based on the total weight of the ethylenically unsaturated monomers. For example, the ethylenically unsaturated monomers may comprise from 10 to 25%, from 10% to 20% or from 10% to 15%, by weight of monomer b) based on the total weight of the ethylenically unsaturated monomers. Alternatively, the ethylenically unsaturated monomers may comprise from 20 to 40%, from 25% to 40% or from 30% to 40%, by weight of monomer b) based on the total weight of the ethylenically unsaturated monomers.

The ethylenically unsaturated monomers may comprise monomer c). Monomer c) comprises or consists of one or more ethylenically unsaturated monomers bearing a hydroxyl group.

Monomer c) may comprise or consist of a hydroxyalkyl (meth)acrylate, preferably with said alkyl being in C2 to C4.

In particular, monomer c) may comprise or consist of one or more monomers selected from 2-hydroxyethyl acrylate, 2-hydroxyethyl methacrylate, 2-hydroxypropyl acrylate, 2-hydroxypropyl methacrylate, and mixtures thereof.

Preferably, monomer c) comprises or consists of 2-hydroxyethyl (meth)acrylate.

The total amount of monomer c) may be from 0 to 5%, from 0.3 to 5%, from 0.3 to 4%, from 0.5 to 3%, from 0.5 to 2%, or from 0.7 to 1.5%, by weight based on the total weight of the ethylenically unsaturated monomers.

The ethylenically unsaturated monomers may monomer d). Monomer d) comprises or consists of one or more ethylenically unsaturated monomers bearing an acidic group.

The ethylenically unsaturated monomer bearing an acidic group may comprise 2 to 30 carbon atoms and an ethylenically unsaturated group selected from acryloyl ($-C(=O)-CH=CH_2$), methacryloyl ($-C(=O)-C(CH_3)=CH_2$) or vinyl ($-CH=CH_2$). The acidic group may be selected from a carboxylic acid (-COOH) group, a carboxylate (-COO-) group, a phosphonic acid ($-P(=O)(OH)_2$) group, a phosphonate ($-P(=O)(OR)_2$) group, a sulfonic acid (-S(=O)zOH) group, a sulfonate (-S(=O)zOR) group, a phosphate ($-O-P(=O)(OR)_2$) group , wherein each R is independently a counterion, a hydrogen atom, or an optionally substituted hydrocarbyl

In particular, monomer d) may comprise or consist of one or more monomers selected from mono- or dicarboxylic acid monomers, phosphorous-based acidic monomers, sulfur-based acidic monomers, salts thereof and mixtures thereof.

In a first embodiment, monomer d) may comprise or consist of an acidic monomer d1) selected from mono- or dicarboxylic acid monomers, cyclic anhydride monomers and salts thereof. Monocarboxylic acid monomers can be selected from (meth)acrylic acid, p-styrene carboxylic acid, 3-butenoic acid, 2-carboxyethyl acrylate, ethyl acrylic acid, crotonic acid, vinyl acetic acid and their combinations. As dicarboxylic acid monomers and cyclic anhydride monomers, mention can be made of: fumaric acid, maleic acid, maleic anhydride, tetrahydrophthalic acid, tetrahydrophthalic anhydride, itaconic acid, mesaconic acid, citraconic acid, glutaconic acid, muconic acid and their combinations.

Preferably, monomer d1) comprises or consists of (meth)acrylic acid.

In a second embodiment, monomer d) may comprise or consist of an acidic monomer d2) selected from the group consisting of phosphorous-based (P-based) and sulfur-based (S-based) acidic monomers. Suitable examples can be selected as follows:

- P-based acidic monomers d2) may be selected from the group consisting of phosphoalkyl or phosphoalkyl ether (meth)acrylates or phosphinoalkyl or phosphinoalkyl ether (meth)acrylates. Said monomers may be partial esters of phosphoric acid or of phosphonic acid with hydroxyalkyl (meth)acrylates or with mono hydroxylated polyether (meth)acrylates or with hydroxylated alkyl polyether (meth)acrylates. They can also be selected from the group consisting of phospho alkyl (meth)acrylamides, phosphoalkyl crotonates, phosphoalkyl maleates, phosphoalkyl fumarates, phosphodialkyl (meth)acrylates, phosphodialkyl crotonates, vinyl phosphates, (meth)allyl phosphate, and phosphate esters of polyether glycol (meth)acrylates, in particular phosphate esters of polypropylene glycol (meth)acrylates, preferably from phospho alky (meth)acrylamides, or phosphate esters of polyether glycol (meth)acrylates;
- S-based acidic monomers d2) may be selected from partial esters of sulfuric acid (sulfate acid esters) with hydroxyalkyl (meth)acrylates or with mono hydroxylated polyether (meth)acrylates or monohydroxylated alkyl polyether (meth)acrylates or partial ester of sulfonic acid (sulfonate acid esters) with the same (meth)acrylates as defined for sulfuric acid or from sodium 2-acrylamido-2-methyl propanesulfonate, sodium vinyl sulfonate, sodium styrene sulfonate, sodium methyl allylsulfonate, sodium allylsulfonate, or sodium allyloxyhydroxysulfonate.

Preferably, monomer d2) comprises or consists of a 2-acrylamido-2-methyl propanesulfonic acid salt and more preferably a sodium salt thereof.

In a third embodiment, monomer d) comprises or consists of a mixture of d1) and d2) as defined above.

Preferably, monomer d) comprises or consists of a mixture of (meth)acrylic acid and 2-acrylamido-2-methyl propanesulfonic acid sodium salt.

The total amount of monomer d) may be from 0 to 2%, from 0.3 to 2%, from 0.3 to 1.8%, from 0.6 to 1.7%, from 0.8 to 1.6%, or from 1 to 1.5%, by weight based on the total weight of the ethylenically unsaturated monomers.

The ethylenically unsaturated monomers may comprise monomer e). Monomer e) comprises or consists of one or more vinyl esters of carboxylic acids.

Monomer e) may comprise or consist of one or more vinyl esters of C2-C20 carboxylic acids.

In particular, monomer e) may comprise or consist of one or more monomers selected from vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof.

More particularly, monomer e) may comprise or consist of vinyl acetate, a vinyl ester of versatic acid or a mixture thereof.

The total amount of monomer e) may be from 0 to 30%, from 1 to 30%, from 2 to 20%, or from 4 to 15%, by weight based on the total weight of the ethylenically unsaturated monomers.

The ethylenically unsaturated monomers may comprise monomer f). Monomer f) may comprise or consist of one or more ethylenically unsaturated monomers bearing a functional group, wherein said functional group is selected from epoxy, carbonyl and a nitrogen-containing group.

The ethylenically unsaturated monomer bearing a functional group may comprise may comprise 2 to 30 carbon atoms and an ethylenically unsaturated group selected from acryloyl ($-C(=O)-CH=CH_2$), methacryloyl ($-C(=O)-C(CH_3)=CH_2$), vinyl ($-CH=CH_2$), crotyl ($-CH=CH(CH_3)$) or allyl ($-CH_2-CH=CH_2$). The functional group may be selected from ketone, aldehyde, acetoacetoxy, acetoacetamide, 1,1-dimethyl-3-oxobuyl (diacetone), glycidyl ether, amino ($-NH_2$), alkylamino or dialkylamino ($-NHR$ or $-NR_2$ with R is alkyl), cyano ($-CN$) or a heterocycle with one or more nitrogen ring atoms.

In particular, monomer f) may comprise or consist of one or more monomers selected from glycidyl (meth)acrylate, acetoacetoxyethyl (meth)acrylate, acetoacetoxypropyl (meth)acrylate, acetoacetobutyl (meth)acrylate, 2,3-di(acetoacetoxy)propyl (meth)acrylate, diacetone (meth)acrylate, acetonyl (meth)acrylate, allyl acetoacetate, vinyl acetoacetate, methylvinylketone, ethylvinylketone, butylvinylketone, (meth)acroleine, crotonaldehyde, formylstyrene, N-vinyl pyrrolidine, N-vinyl caprolactam (meth)acrylonitrile, (meth)acrylamide, N-methyl (meth)acrylamide, N-ethyl (meth)acrylamide, N-isopropyl (meth)acrylamide, N-cyclohexyl (meth)acrylamide, N-cyclopentyl (meth)acrylamide, N-methoxymethyl (meth)acrylamide, N-butoxymethyl (meth)acrylamide, N,N-dibutyl (meth)acrylamide, N-butyl (meth)acrylamide, N,N-diethyl (meth)acrylamide, N,N-dimethyl (meth)acrylamide, N-octyl (meth)acrylamide, N-decyl (meth)acrylamide, N-dodecyl (meth)acrylamide, N-octadecyl (meth)acrylamide, N-isopropyl (meth)acrylamide, N-tert-butyl (meth)acrylamide, N-isobutyl (meth)acrylamide, N,N,3,3-tetramethylacrylamide, N-phenyl (meth)acrylamide, N-(meth)acryloyl morpholine, diacetone acrylamide, N-methylol(meth)acrylamide, 2-aminoethyl (meth)acrylate, t-butyl aminoethyl methacrylate, dimethylaminoethyl methacrylate, diethylaminoethyl methacrylate, N-(N,N-dimethylamino)ethyl (meth)acrylamide;

N,-(N,N-dimethylamino)propyl (meth)acrylamide, 2-t-butylaminoethyl methacrylate, N,N-dimethylaminoethylacrylate, N-(2-methacryloyloxyethyl)ethylene urea and methacrylamidoethylethylene urea and mixtures thereof.

Preferably, the monomer f) does not contain any (meth)acrylamide.

The total amount of monomer f) may be from 0 to 5%, from 0 to 4%, from 0 to 3%, or from 0 to 2%, by weight based on the total weight of the ethylenically unsaturated monomers.

The ethylenically unsaturated monomers may comprise monomer g). Monomer g) comprises or consists of one or more vinyl ethers.

Monomer g) may comprise or consist of one or more monomers selected from vinyl methyl ether, vinyl ethyl ether, vinyl n-butyl ether, vinyl iso-butyl ether and mixtures thereof.

The total amount of monomer g) may be from 0 to 20%, from 0 to 15%, or from 0 to 10%, by weight based on the total weight of the ethylenically unsaturated monomers.

The ethylenically unsaturated monomers may comprise monomer h). Monomer h) comprises or consists of one or more conjugated dienes.

In particular, monomer h) may comprise or consist of one or more monomers selected from butadiene, isoprene, pentadiene, chlorodiene and mixtures thereof.

The total amount of monomer h) may be from 0 to 20%, from 0 to 15%, or from 0 to 10%, by weight based on the total weight of the ethylenically unsaturated monomers.

The ethylenically unsaturated monomers may comprise monomer i). Monomer i) comprises or consists of one or more alpha-olefins.

In particular, monomer i) may comprise or consist of one or more monomers selected from ethylene, propene, 1-butene, isobutylene, diisobutylene, 1-nonene, 1-decene and mixtures thereof.

The total amount of monomer i) may be from 0 to 20%, from 0 to 15%, or from 0 to 10%, by weight based on the total weight of the ethylenically unsaturated monomers.

The ethylenically unsaturated monomers may comprise monomer j). Monomer j) comprises or consists of one or more vinyl halides.

In particular, monomer j) may comprise or consist of one or more monomers selected from vinyl chloride, vinylidene chloride or mixtures thereof.

The total amount of monomer j) may be from 0 to 20%, from 0 to 15%, or from 0 to 10%, by weight based on the total weight of the ethylenically unsaturated monomers.

The ethylenically unsaturated monomers may comprise monomer k). Monomer k) comprises or consists of one or more ethylenically unsaturated monomers bearing a silane group.

The ethylenically unsaturated monomer bearing a silane group may comprise 2 to 30 carbon atoms and a group selected from methacryloyl ($-C(=O)-C(CH_3)=CH_2$) and vinyl ($-CH=CH_2$). The silane group may be an alkoxysilane group, in particular an alkoxysilane group having the following formula:

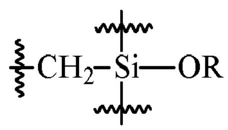

where R is an alkyl, in particular R is an alkyl comprising 1-6 carbon atoms, more particularly R is methyl or ethyl.

In one embodiment, the silane group is a dialkoxysilane or a trialkoxysilane group, in particular a dialkoxysilane group having the following formula:

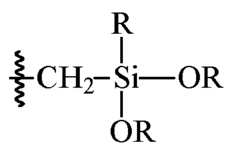

or a trialkoxylsilane group having the following formula:

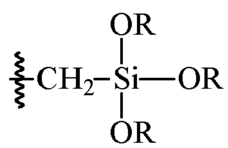

wherein each R is independently an alkyl, in particular an alkyl comprising 1-6 carbon atoms, more particularly methyl or ethyl.

In particular, monomer k) may comprise or consist of one or more monomers selected from 3-methacryloxypropyl tri(alkoxy)silane, methacryloxymethyl tri(alkoxy)silane, 3-methacryloxypropylmethyl di(alkoxy)silane, vinylalkyl di(alkoxy)silane, vinyl tri(alkoxy)silane and mixtures thereof.

More particularly, monomer k) may comprise or consist of one or more monomers from vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane and mixtures thereof.

Even more particularly, monomer k) may comprise or consist of 3-methacryloxypropyl trimethoxysilane.

The total amount of monomer k) may be from 0 to 5%, from 0 to 2%, from 0 to 1%, or from 0 to 0.5%, by weight based on the total weight of the ethylenically unsaturated monomers.

The ethylenically unsaturated monomers may comprise monomer l). Monomer l) comprises or consists of one or more cyclic (meth)acrylate monomers.

In particular, monomer l) may comprise or consist of one or more monomers selected from isobornyl (meth)acrylate, cyclohexyl (meth)acrylate, 3,3,5-trimethylcyclohexyl (meth)acrylate, tert-butylcyclohexyl (meth)acrylate, benzyl methacrylate, 2-phenoxyethyl (meth)acrylate, cyclic trimethylolpropane formyl (meth)acrylate (also referred to as 5-ethyl-1,3-dioxan-5-yl)methyl (meth)acrylate), dicyclopentadienyl (meth)acrylate, tricyclodecane methanol mono(meth)acrylate, tetrahydrofurfuryl (meth)acrylate, (2,2-dimethyl-1,3-dioxolan-4-yl)methyl (meth)acrylate, (2-ethyl-2-methyl-1,3-dioxolan-4-yl)methyl (meth)acrylate and mixtures thereof.

The total amount of monomer l) may be from 0 to 20%, from 0 to 15%, or from 0 to 10%, by weight based on the total weight of the ethylenically unsaturated monomers.

The ethylenically unsaturated monomers may comprise monomer m). Monomer m) comprises or consists of one or more crosslinking monomers.

A crosslinking monomer may be a compound bearing at least two functional groups which are capable of reacting with ethylenically unsaturated monomers. In particular, a crosslinking monomer may comprise at least two polymerizable carbon-carbon double bonds.

Monomer m) may comprise or consist of one or more monomers selected from a multifunctional (meth)acrylate, a polyvinylic monomer, a compound comprising both a (meth)acrylic group and a vinyl group and mixtures thereof.

More particularly, monomer m) may comprise or consist of one or more monomers selected from allyl (meth)acrylate, diallyl (meth)acrylate, vinyl acrylate, divinyl benzene, diallyl ether, glycerol diallyl ether, glycerol triallyl ether, trimethylolpropane diallyl ether, trimethylolpropane triallyl ether, pentaerythritol triallyl ether, diallyl phthalate, dicyclopentenyl oxyethyl methacrylate, ethylene glycol di(meth)acrylate, di-, tri- or tetraethylene glycol di(meth)acrylate, propylene glycol di(meth)acrylate, di-, tri- or tetrapropylene glycol di(meth)acrylate, 1,2-butanediol di(meth)acrylate, 2,3-butanediol di(meth)acrylate, 1,3-butanediol di(meth)acrylate, 1,4-butanediol di(meth)acrylate, 1,5-pentanediol di(meth)acrylate, 1,6-hexanediol di(meth)acrylate, neopentyl glycol di(meth)acrylate, 2-methyl-2,4-pentanediol di(meth)acrylate, polybutadiene di(meth)acrylate, cyclohexane-1,4-dimethanol di(meth)acrylate, tricyclodecane dimethanol di(meth)acrylate, trimethylolethane tri(meth)acrylate, trimethylolethane di(meth)acrylate, trimethylolpropane tri(meth)acrylate, trimethylolpropane di(meth)acrylate, pentaerythritol di(meth)acrylate, pentaerythritol tri(meth)acrylate, pentaerythritol tetra(meth)acrylate, di(trimethylolpropane) diacrylate, di(trimethylolpropane) triacrylate, di(trimethylolpropane) tetra(meth)acrylate, sorbitol penta(meth)acrylate; di(pentaerythritol) tetra(meth)acrylate; di(pentaerythritol) penta(meth)acrylate; di(pentaerythritol) hexa(meth)acrylate; tris(2-hydroxyethyl) isocyanurate tri(meth)acrylate, as well as the alkoxylated (e.g., ethoxylated and/or propoxylated) derivatives thereof; and mixtures thereof.

The total amount of monomer m) may be from 0 to 5%, from 0 to 2%, or from 0 to 1%, by weight based on the total weight of the ethylenically unsaturated monomers.

Monomers a), b), c), d) e), f), g), h), i), j), k), l) and m) are distinct from one another.

The type and amount of monomers a), b), c), d) e), f), g), h), i), j), k), l) and m) may be adjusted so that the resulting polymer particles exhibit the desired Tg as defined above.

In a preferred embodiment, the ethylenically unsaturated monomers of the monomeric composition comprise, consist of or consist essentially of one of the following combination of monomers:

- monomers a), b), c) and d);
- monomers a), c), d) and e);
- monomers a), b), c), d) and f);
- monomers a), b), c), d) and m); or
- monomers a), b), c), d), f) and m).

In one embodiment, the total weight of monomers a), b), c) and d) represents at least 90%, in particular at least 95%, more particularly at least 98%, even more particularly at least 99%, more particularly still 100% of the total weight of the ethylenically unsaturated monomers.
In another embodiment, the total weight of monomers a), c), d) and e) represents at least 90%, in particular at least 95%, more particularly at least 98%, even more particularly at least 99%, more particularly still 100% of the total weight of the ethylenically unsaturated monomers.
In another embodiment, the total weight of monomers a), b), c), d) and f) represents at least 90%, in particular at least 95%, more particularly at least 98%, even more particularly at least 99%, more particularly still 100% of the total weight of the ethylenically unsaturated monomers.
In one embodiment, the total weight of monomers a), b), c), d) and m) represents at least 90%, in particular at least 95%, more particularly at least 98%, even more particularly at least 99%, more particularly still 100% of the total weight of the ethylenically unsaturated monomers.
In another embodiment, the total weight of monomers a), b), c), d), e) and m) represents at least 90%, in particular at least 95%, more particularly at least 98%, even more particularly at least 99%, more particularly still 100% of the total weight of the ethylenically unsaturated monomers.
In a particularly preferred embodiment, the ethylenically unsaturated monomers of the monomeric composition comprise, consist of or consist essentially of monomers a), b), c) and d).
More preferably, the ethylenically unsaturated monomers of the monomeric composition may comprise, consist of or consist essentially of

- 50 to 80%, preferably 60 to 70%, of monomer a);
- 15 to 45%, preferably 25 to 35%, of monomer b);
- 0.1 to 5%, preferably 0.3 to 2%, of monomer c);
- 0.1 to 5%, preferably 0.3 to 2% of monomer d);

wherein the % are by weight based on the total weight of the ethylenically unsaturated monomers.
Even more preferably, the ethylenically unsaturated monomers of the monomeric composition may comprise, consist of or consist essentially of:

- 50 to 80%, preferably 60 to 70%, of monomer a) which is selected from n-butyl (meth)acrylate, 2-ethylhexyl acrylate, methyl methacrylate and mixtures thereof;
- 15 to 45%, preferably 25 to 35%, of monomer b) which is styrene;
- 0.1 to 5%, preferably 0.3 to 2%, of monomer c) which is 2-hydroxyethyl (meth)acrylate;
- 0.1 to 5%, preferably 0.3 to 2% of monomer d) which is selected from (meth)acrylic acid, 2-acrylamido-2-methyl-1-propanesulfonic acid sodium salt and mixtures thereof;

wherein the % are by weight based on the total weight of the ethylenically unsaturated monomers.
The monomeric composition further comprises at least one surfactant and at least one initiator as detailed below. The monomeric composition may further comprise one or more additional components selected from a chain transfer agent, a buffer and mixtures thereof as detailed below.

*Surfactant*

The monomeric composition used to obtain the aqueous polymer dispersion of component A) comprises at least one surfactant. The monomeric composition may comprise a mixture of surfactants. The surfactant may be a compound having both a hydrophilic and a hydrophobic part that is able to form micelles of monomer. The surfactant may act as a stabilizer during and/or after the emulsion polymerization.
The surfactant may be selected from an anionic surfactant, a non-ionic surfactant and mixtures thereof, preferably a mixture of an anionic surfactant and a non-ionic surfactant. Examples of preferred surfactants include, but are not limited to an alkyl sulfate, an alkyl ether sulfate, an alkyl sulfonate, an alkyl benzenesulfonate, an optionally substituted diphenyl oxide disulfonate, an optionally ethoxylated sulfosuccinate mono- or diester, a phosphonate mono- or diester, a phosphate mono- or diester, an ethoxylated fatty alcohol, an optionally ethoxylated fatty acid, an ethoxy-propoxy copolymer (EO-PO copolymer), salts thereof, and mixtures thereof. A list of suitable surfactants is available in the book "Surfactants and Polymers in Aqueous solutions" (Holmberg et al., 2002, John Wiley & Sons). The surfactant may be a polymerizable surfactant, preferably a mixture of a polymerizable anionic surfactant and a polymerizable non-ionic surfactant.
Examples of suitable alkyl sulfates and alkyl ether sulfates are optionally ethoxylated C6-C22 fatty alcohol sulfates, such as decyl sulfate, lauryl sulfate (like Disponil® SLS), stearyl sulfate, C12-C14 fatty alcohol ether sulfate

with 2 to 50 EO units (like Disponil® FES 77, Disponil® FES 27, Disponil® FES 993, Disponil® FES 32, Rhodapex LA 120s).

Examples of suitable alkyl sulfonates are C6-C22 fatty alcohol sulfonates such as decyl sulfonate, lauryl sulfonate and stearyl sulfonate.

Examples of suitable alkyl benzenesulfonates are benzene sulfonates substituted with a linear or branched C6-C22 alkyl group such as sodium dodecylbenzene sulfonate (like POLYSTEP® A-16-22 or Rhodacal® DS-4).

An example of a suitable diphenyl oxide disulfonate is sodium dodecyl diphenyl oxide disulfonate (like Dowfax® 2A1, Calfax® DB45).

Examples of suitable ethoxylated fatty alcohols are ethoxylated C6-C22 fatty alcohols with EO degree of 2 to 50, such as C12-C14 alcohol ethoxylates with EO degree of 2 to 50 (like Disponil® A 3065, Polirol® AL 1065, Rhodasurf® 3065), C12-C14 secondary alcohol ethoxylates, with EO degree of 2 to 50 (like Tergitol® 15-S-20), C13 alcohol ethoxylates with EO degree of 2 to 50 (like Emulan® TO 4070, Emulan® TO 2080 and Polirol® AL 1328), C16-C18 alcohol ethoxylates with EO degree of 2 to 100 (like Empilan® KM 80).

Examples of suitable sulfosuccinate mono- or diesters are optionally ethoxylated C6-C20 alkyl monoesters or diesters of sulfosuccinic acid (like Aerosol® A-102, Aerosol® MA-80, Aerosol® GPG).

Examples of suitable phosphate mono- or diesters are optionally alkoxylated alkyl phosphate monoester-diacids or salts, optionally alkoxylated alkyl diphosphate diester-monoacids or salts or mixtures thereof (like Rhodafac® Rs 410, Rhodafac® Rs 610 Rhodafac® Rs 710, Rhodafac® Rs 960).

Examples of suitable polymerizable surfactants are Polyoxyethylene 9-octadecenyl ether phosphate (XIV, Maxemul® 6106), an ethylenically unsaturated phosphate ester (like Maxemul® 6112) an allyl nonyl phenol ethoxylated sulphate (like respectively Hitenol® AR or BC series) or a polyoxyalkylene alkenyl ether sulfate (like Hitenol® KH series, Reasoap® SR or SE series, Latemul® PD series).

In one embodiment, the surfactant is a mixture of an optionally ethoxylated sulfosuccinate mono- or diester and an ethoxylated fatty alcohol. In another embodiment, the surfactant is a mixture of an alkyl ether sulfate, a diphenyl oxide disulfonate and an optionally ethoxylated sulfosuccinate mono- or diester. In another embodiment, the surfactant is a mixture of a phosphate mono- or diester and at least one of the following surfactants: an alkyl ether sulfate, an optionally ethoxylated sulfosuccinate mono- or diester and mixtures thereof as described in WO 2018/184852. In another embodiment, the surfactant is a mixture of a diphenyl oxide disulfonate and an ethoxylated fatty alcohol (such as C13 alcohol ethoxylates with EO degree of 2 to 50 and/or C16-C18 alcohol ethoxylates, with EO degree of 2 to 100).

The total amount of surfactant in the monomeric composition may be from 0.01 to 5%, in particular from 0.1 to 2%, more particularly from 0.2 to 1.5%, by weight of surfactant based on the total weight of the ethylenically unsaturated monomers.

*Initiator*

The monomeric composition used to obtain the aqueous polymer dispersion of component A) comprises at least one initiator. The monomeric composition used to obtain the aqueous polymer dispersion of component A) may comprise a mixture of initiators.

The initiator may comprise a water-soluble free radical initiator. Such initiators are well known in the art and include, for example, peroxides as described above for the post-polymerization treatment, especially inorganic persulfate compounds such as ammonium persulfate, potassium persulfate and sodium persulfate; hydrogen peroxide; organic hydroperoxides such as cumene hydroperoxide, t-butyl hydroperoxide, acetyl peroxide, benzoyl peroxide, lauroyl peroxide; peracetic acid and perbenzoic acid; redox systems comprising a peroxide and a reducing agent (such as ferrous compounds, carboxylic acids and/or sodium metabisulfite), which promote the decomposition of the peroxide; as well as other free radical producing materials such as an azo-initiator, for example 2,2'-azobisisobutyronitrile, 4,4'-azobis(4-cyanovaleric acid) or 2,2'-azobis(2-methylbutyronitrile); and combinations thereof.

In one embodiment, the initiator of the monomeric composition comprises a peroxide, in particular an inorganic persulfate compound such as ammonium persulfate, potassium persulfate, sodium persulfate and mixtures thereof. More particularly, the initiator may be sodium persulfate.

In another embodiment, the initiator of the monomeric composition comprises a redox system comprising a peroxide and a reducing agent selected from polyunsaturated carboxylic acids, hydroxylated carboxylic acids and mixtures thereof.

The total amount of initiator in the monomeric composition may be from 0.01 to 3.0%, in particular from 0.1 to 2.0%, more particularly from 0.2 to 1.5%, by weight of initiator based on the total weight of the ethylenically unsaturated monomers.

*Chain-transfer agent*

The monomeric composition used to obtain the aqueous polymer dispersion of component A) may further

comprise a chain transfer agent. In one embodiment, the monomeric composition comprises a chain transfer agent. In another embodiment, the monomeric composition is free of a chain transfer agent. When the monomeric composition is free of monomer b), the monomeric composition may comprise a chain transfer agent. When the monomeric composition comprises monomer b), the monomeric composition may be free of a chain transfer agent.

The chain transfer agent may be a compound able to react with a growing polymer chain to form a "dead" polymer with the concurrent formation of a new center for polymer growth. Chain transfer agents are also referred to as molecular weight modifiers as they are used to control the molecular weight of the polymer chain. Suitable chain transfer agents are well known in the art and include, for example, thiols such as n-dodecyl mercaptan, tert-dodecyl mercaptan, iso-octyl 3-mercaptopropionate, iso-octyl mercaptoacetate and 2-ethylhexyl thioglycolate; halocarbons such as carbon tetrachloride and carbon tetrabromide. In one embodiment, the monomeric composition comprises a chain transfer agent comprising a thiol group, more particularly a chain transfer agent selected from n-dodecyl mercaptan, tert-dodecyl mercaptan, iso-octyl 3-mercaptopropionate, iso-octyl mercaptoacetate or 2-ethylhexyl thioglycolate. Even more particularly, the chain transfer agent may be n-dodecyl mercaptan or tert-dodecyl mercaptan,

In particular, the monomeric composition may comprise from 0 to 0.2%, from 0 to 0.15%, from 0 to 0.1%, from 0 to 0.05%, from 0 to 0.02%, from 0 to 0.01%, from 0 to 0.005%, from 0 to 0.002%, from 0 to 0.001%, or even 0%, by weight of chain transfer agent based on the total weight of the ethylenically unsaturated monomers.

*Buffer*

The monomeric composition used to obtain the aqueous polymer dispersion of component A) may comprise a buffer. The buffer may be a compound that controls and maintains the pH during the polymerization step in a controlled range, for example from 2 to 10, in particular 3 to 9. In particular, the buffer may be selected from ammonia, sodium bicarbonate, sodium carbonate, sodium acetate, 2-amino-2-methyl-1-propanol and sodium hydroxide.

The monomeric composition may comprise 0 to 0.5%, in particular 0.01 to 0.25%, by weight of buffer based on the total weight of the ethylenically unsaturated monomers.

The adhesive composition of the invention may be obtained according to the process described hereinafter.

Hydraulic binder

The composition of the invention comprises a hydraulic binder, also referred to as component B).

As used herein, the term hydraulic binder means a dry powder that hardens after the addition of water.

In particular, the hydraulic binder may comprise cement, fly ash, blast furnace slag, lime, plaster, gypsum, pozzolan or mixtures thereof.

In a preferred embodiment, the composition of the invention is a cementitious waterproofing coating composition and the hydraulic binder comprises cement. The cement may be a Portland cement, an aluminous cement or a mixture thereof. Portland cement may be defined according to standard EN 197-1 (April 2012). An aluminous cement may be a cement having an alumina ($Al_2O_3$) content greater than 30%, or greater than 40%, or greater than 55%, or greater than 60%, by weight based on the weight of the cement. Examples of aluminous cements include calcium aluminate cements (CAC) and calcium sulfoaluminate cements (CSA).

The hydraulic binder may further comprise one or more non-cementitious fillers. Examples of non-cementitious fillers include sand (such as silica sand and quartz sand), rock flour, quartz flour, dolomite, lime, calcium carbonate, calcium sulfate, a clay or aluminium silicate (such as kaolinite, montmorillonite, bentonite or illite), talc or mica, and lightweight fillers (i.e. porous fillers or expanded such as pumice, foamed glass, aerated concrete, perlite or vermiculite.

The hydraulic binder may further comprise one or more additives. Examples of additives include alkali metal hydroxide and/or alkaline earth metal hydroxide selected from the group consisting of zinc oxide, zinc hydroxide, and zinc hydroxide carbonate; a thickener in liquid or powder form, such as a cellulose ether, for example hydroxyethyl methyl cellulose, or a gum; an antifoam agent; and mixtures thereof.

The hydraulic binder may comprise 10 to 50% by weight of cement and 15 to 70% of non-cementitious filler such as a mixture of sand and calcium carbonate, based on the weight of component B).

Process for the preparation of the composition

The composition of the invention may be prepared with a process comprising the following steps:

i) preparing an aqueous polymer dispersion by emulsion polymerization of a monomeric composition comprising

- ethylenically unsaturated monomers;
- at least one surfactant; and

- at least one initiator;

ii) adding a chase to the aqueous polymer dispersion obtained in step i) as a post-polymerization treatment,
iii) mixing the aqueous polymer dispersion obtained in step ii) with a hydraulic binder;

wherein the initiator of step i) and/or the chase of step ii) comprises a redox system comprising a peroxide and a reducing agent selected from polyunsaturated carboxylic acids, hydroxylated carboxylic acids and mixtures thereof.

The aqueous polymer dispersion of step i) may be prepared using any known emulsion polymerization procedure which produces polymer dispersions in aqueous latex form. Such procedures are described in, for example, Encyclopedia of Polymer Science and Engineering, Vol. 8, p. 659 ff (1987).

Emulsion polymerization involves a system comprising water, monomers, at least one surfactant and at least one initiator. The emulsion polymerization process typically starts by dispersing the monomers (organic phase) in water (aqueous phase) with the aid of at least one surfactant to provide an emulsion. At least one initiator is usually dissolved in the aqueous phase and provides a source of free radicals that initiate polymerization. The dispersed monomer droplets act as reservoirs supplying monomer to the growing polymer particles by diffusion through the water. The polymer particles are prevented from coalescing with each other by the surfactant. The emulsion polymerization therefore provides as a product an aqueous dispersion of polymer particles.

The emulsion polymerization may be conducted with the monomeric composition described above. The emulsion polymerization may be conducted using the following conditions. A pre-emulsion comprising ethylenically unsaturated monomers and at least one surfactant in water may be prepared. A solution of at least one initiator in water may be separately prepared. The pre-emulsion and the initiator solution may be fed in a reactor.

The introduction of the pre-emulsion may be continuous, for example over a time of 2 to 10 hours, in particular 4 to 8 hours. Alternatively, the introduction of the pre-emulsion may be discontinuous, for example part of the pre-emulsion may first be introduced in the reactor to form seed particles and the remainder of the pre-emulsion may be introduced in one or more successive steps. The ethylenically unsaturated monomers in the seed part of the pre-emulsion may represent from 0.05 to 10% by weight of the total weight of ethylenically unsaturated monomers. The emulsion polymerization may be a multistage emulsion polymerization with at least two successive steps of polymerization using different monomeric compositions.

The introduction of the initiator solution depends on the chemical nature of the initiator system and the kind of polymerization process. The initiator solution can be introduced in the reactor continuously or stepwise in the course of the emulsion polymerization. Normally, it is preferred to introduce part of the initiator solution in the reaction in a first step and then feeding the remainder into the reactor according to the monomers feed.

The temperature of the reactor during the emulsion polymerization may be maintained in the range 30 to 120°C, preferably from 60 to 100°C.

The process of the invention comprises a post-polymerization treatment step ii). The post-polymerization treatment is conducted after the emulsion polymerization. The post-polymerization treatment may be conducted directly after the emulsion polymerization. The post-polymerization treatment may be conducted without cooling the emulsion polymerization medium.

The post-polymerization treatment comprises adding a chase to the aqueous polymer dispersion. The chase may comprise a redox system comprising an oxidizing agent and a reducing agent.

The reducing agent may be selected from a ferrous compound, a carboxylic acid, sodium sulfite, sodium bisulfite, sodium metabisulfite, sodium sulfoxylate formaldehyde, Bruggolite® FF6 M (a mixture of disodium salts of 2-hydroxy-2-sulfinatoacetic acid and 2-hydroxy-2-sulfonatoacetic acid at 70 wt% and sodium sulfite at 30 wt%).

In a preferred embodiment, the reducing agent is selected from polyunsaturated carboxylic acids, hydroxylated carboxylic acids and mixtures thereof. More preferably, the reducing agent is selected from tartaric acid, sorbic acid, glycolic acid and mixtures thereof. Even more preferably the reducing agent is tartaric acid.

The oxidizing agent may be a peroxide as defined above. In particular, the peroxide may be selected from a persulfate, hydrogen peroxide (HzOz), an organic hydroperoxide, a peracid, or a mixture thereof. More particularly, the peroxide is hydrogen peroxide.

Preferably, the redox system used as a chase in step ii) comprises a peroxide and a reducing agent selected from polyunsaturated carboxylic acids, hydroxylated carboxylic acids and mixtures thereof.

The molar ratio of the peroxide to the reducing agent in the redox system used during and/or after polymerization may range from 1:3 to 3:1.

The amounts of reducing agent and peroxide used in the post-polymerization treatment may be as defined above.

The post-polymerization treatment may be carried out at a temperature of at least 60°C, in particular at least 70°C, more particularly at least 80°C.

The post-polymerization treatment may be carried out for at least 1h, in particular at least 2h, more particularly at least 3h.

After the post-polymerization treatment, the content of the reactor may be cooled to a temperature of 20 to 40°C. The pH of the polymer dispersion may be adjusted in a pH range between 3.5 to 8.5.

The post-polymerization treatment advantageously reduces the residual monomer content of the aqueous polymer dispersion. Accordingly, the aqueous polymer dispersion after step ii) typically meets the following conditions:

- a residual monomer content of less than 100 ppm or even less than 50 ppm, and/or
- a VOC content of less than 1,500 ppm or even less than 1,000 ppm,

as measured according to the methods provided in the Examples below.

The process of the invention comprises a step iii) of mixing the post-treated aqueous polymer dispersion with a hydraulic binder to provide the composition of the invention. Once the hydraulic binder is mixed with the aqueous polymer dispersion, the resulting composition is in paste form and should be applied on an adequate substrate before the paste sets or hardens.

As used herein, the term "setting" or "hardening" refers to the irreversible solidification of the paste as described for example in Concrete - Microstructure, Properties, & Materials, 3rd edition, P. Kumar Mehta et al., page 220. The beginning of solidification, called the initial set, marks the point in time when the paste has become unworkable. The paste does not solidify suddenly, but requires considerable time to become fully rigid. The time taken to solidify completely marks the final set.

In particular, the paste composition may be applied onto a substrate and left to harden for 1 to 4 days. Examples of suitable substrates include, for example, concrete, masonry, brick, drywall (gypsum board), plaster, stone, cement board, plywood, wood surfaces and steel.

<u>Uses and composite material</u>

The composition of the invention may be used in the preparation of a composite material. In particular, the composite material may be selected from a coating, an adhesive, a mortar, a putty or a sealant. More particularly, the composition of the invention may be used to prepare a coating, preferably a cementitious waterproofing coating.

Cementitious waterproofing coatings may especially be useful in products for construction industry, such as skim coats, crack isolation membranes, sealing slurries or repair mortars, and as basecoats in exterior insulation finishing systems (EIFS).

The cementitious waterproofing coating advantageously meets at least one and preferably all the following conditions:

- a 21-day wet elongation at break above 300% or even above 350%,
- a dry elongation at break above 250% and even above 300%,
- a 21-day water absorption of less than 20% and even less than 14%,
- a tackiness lower than 8 N,

as measured according to the methods described in the Examples.

The invention thus also relates to a composite material obtained with the composition of the invention. In particular, the composite material may be selected from a coating, an adhesive, a mortar, a putty or a sealant. More particularly, the composite material may be a coating, preferably a cementitious waterproofing coating.

The composite material of the invention exhibits excellent waterproofness and low tackiness. Without wishing to be bound by theory, said properties are believed to result from the use of an aqueous polymer dispersion that has been subjected to a specific post-polymerization treatment before it is mixed with a hydraulic binder.

Accordingly, the invention also relates to the use of a redox system for increasing the impermeability and/or reducing the tackiness of a composite material obtained from an aqueous polymer dispersion and a hydraulic binder, wherein the redox system comprises a peroxide and a reducing agent selected from polyunsaturated carboxylic acids, hydroxylated carboxylic acids and mixtures thereof.

The increase of impermeability and/or reduced tackiness of the composite material may be determined with respect to a composite material obtained from an aqueous polymer dispersion and a hydraulic binder wherein the aqueous polymer dispersion has not been subjected to a specific post-polymerization treatment with a redox system comprising a peroxide and a reducing agent selected from polyunsaturated carboxylic acids, hydroxylated carboxylic acids and mixtures thereof.

The following examples are given for illustrative purposes only and as such do not limit this invention which is defined by the attached claims.

## EXAMPLES

Materials and methods

In the examples, the following compounds were used:

| Abbreviation | Chemical name | Function | Supplier |
|---|---|---|---|
| BA | n-butyl acrylate | Monomer a) | ARKEMA |
| 2EHA | 2-ethylhexyl acrylate | Monomer a) | ARKEMA |
| MMA | methyl methacrylate | Monomer a) | TRINSEO |
| BMA | n-butyl methacrylate | Monomer a) | EVONIK |
| STY | styrene | Monomer b) | TOTAL |
| HEMA | 2-hydroxyethyl methacrylate | Monomer c) | ROHM |
| AA | acrylic acid | Monomer d) | ARKEMA |
| NaAMPS | 2-acrylamido-2-methyl propanesulfonic acid sodium salt | Monomer d) | CIM Chemicals |
| Surfactant A | Dowfax® 2A1 | Ionic surfactant | DOW |
| Surfactant B | Polirol AL 1328 | Non-ionic surfactant | LAMBERTI |
| NaPS | sodium persulfate | Initiator | PEROXITALIA |
| NaCarb | sodium carbonate | pH buffer | SOLVAY |
| TBHP | tert-butyl hydroperoxide (13 wt% aqueous solution) | Post-polymerization peroxide | ARKEMA |
| HzOz | hydrogen peroxide (35 wt% aqueous solution) | Post-polymerization peroxide | ARKEMA |
| FF6 | Bruggolite® FF6 (mixture of disodium salts of 2-hydroxy-2-sulfinatoacetic acid and 2-hydroxy-2-sufonatoacetic acid at 70 wt% and sodium sulfite at 30 wt%) | Post-polymerization reducing agent | BRUEGMANN |
| AsA | Ascorbic acid | Post-polymerization reducing agent | Carlo Erba |
| TaA | L-Tartaric Acid | Post-polymerization reducing agent | Carlo Erba |
| Iron sulfate | Iron sulfate (II) heptahydrate | Catalyzer | Carlo Erba |

The following methods were used to characterize the aqueous polymer dispersions and waterproofing cementitious coatings:

*Particle size*

The polymer dispersions of the examples were further characterized for their particle size by using a dynamic light scattering MALVERN Zetasizer ZS90.

*Solids content*

The solids content of the waterborne polymer dispersion of the examples is carried out according to the norm ISO 1625:1998, with drying time 1h at 105°C

*pH*

The pH of the waterborne polymer dispersion of the examples is carried out according to the norm ISO 976:2013.

*Glass transition temperature (Tg)*

The aqueous polymer dispersion was applied on a PTFE plate, and dried for 7 days at 23°C and 50% Relative Humidity. The Tg was determined by Differential Scanning Calorimetry (DSC). The DSC was carried out with a temperature increase of -100 to 100°C with a rate of 20°C/min. Two runs were carried out with a cooling rate of 40°C/min between the runs. The Tg corresponds to the temperature of the midpoint point of the DSC curve of the second run.

*Residual monomers and VOC analysis*

The Volatile Organic Compounds or "VOC" generally refers to organic compounds that have a boiling point under 250°C, at atmospheric pressure. The residual monomer content and the VOC content were determined with a gas chromatograph Clarus 580 Perkin Elmer equipped with a column (Agilent DB-Select 624UI 60m x 0,250 mm x 1,40 μm), a head space auto sampler and flame ionization detector (FID) using the full evaporation head space technique and iso-butanol as internal standard, in accordance with the method described in "Full Evaporation Head Space Gas Chromatographic Technique for the Determination of Residual Monomers and VOC in Polymer Dispersion", published on: "International Journal of Polymer Analysis and Characterization" Vol 8 n°5, 2003.

*Preparation of cementitious waterproofinq coatings*

Cementitious waterproofing coatings were prepared according to the following method

A) In a 1 L steel container add the hydraulic binder to the aqueous polymeric binder
B) Disperse by hand, with a spatula for 1-2 minutes, trying to break up all the lumps.
C) Stir the mix with a 6.5 cm cowless disperser for 4 minutes at 300 rpm and 30 seconds at 1000 rpm.
D) Apply the resulted formulation onto a silicon based panel with a ruler to obtain a cementitious waterproofing coating with a thickness of 1 mm.
E) Harden the coatings for 24h and cut from the panel.
F) Condition the hardened coatings under standard climate conditions (23°C, 50% relative humidity) for seven days.

*Tackiness*

Tackiness was measured on cementitious waterproofing coatings obtained according to the previous method after 24h of hardening (immediately after step E, but without cutting from the panel)). Three aluminum cylinders weighing 104 grams each were applied on the surface of the cementitious waterproofing coatings and a 2 kg weight was placed on top of each cylinder.

After 24h, the 2 kg weight was taken away and the aluminum cylinders were detached from the coating in order to measure the strength needed to remove each one of them with a portable dynamometer, their mean value corresponding to the tackiness.

*Mechanical characterizations*

The tensile strength and elongation in dry and wet conditions were measured according to standard ISO 527-2-2012, using a dynamometer placed in a room with climate conditions of 23°C and 50% of relative humidity (RH).

The specimens were type 1A, and for each feature, three specimens were used, in orderto calculate a mean value.

The dry tensile strength and elongation was measured after the specimen obtained from the cementitious waterproofing coating had been conditioned for 7 days at 23°C and 50% RH.

The wet tensile strength and elongation was measured after the specimen obtained from the cementitious waterproofing coating had been conditioned for 7 days at 23°C and 50% RH and then immersed for 21 days in water. They were then taken out from water, wiped to remove water from their surface, and then immediately tested.

*Measurement of water absorption*

The test was carried out according to Standard EN 12087-2013.

After conditioning the cementitious waterproofing coating for 7 days at 23°C and 50% RH, a specimen of the coating was cut out, weighed and then immersed in water. Then after 7 or 21 days of immersion, the specimen was taken out from water, wiped to remove water from its surface, and then immediately weighted again.

The water absorption was calculated according to the following equation:

$$\% \, Absorption = \frac{Weight\ A - Weight\ I}{Weight\ I} \times 100$$

wherein

Weight I = initial weight of specimen
Weight A = weight of specimen after 7 or 21 days in water

Example 1: Preparation of an aqueous dispersion and post-polymerization treatment with standard redox system (comparative)

An aqueous dispersion of polymer particles was prepared with the following steps A) to G):

A) 1740 g of deionized water and 1.45 g of surfactant A were added in a glass reactor fitted with a condenser, a stirrer, a temperature control system and inlets for nitrogen and the feed solutions.

B) A monomer pre-emulsion was prepared in a separate container fitted with a stirrer (pre-emulsifier). The monomer pre-emulsion was obtained with 1080 g of deionized water, 52.6 g of surfactant A, 63.3 g of surfactant B and 4762 g of a monomeric mixture comprising 58.6 wt% 2EHA, 32.4 wt% STY and 6.8 wt% BMA based on the total weight of the mixture of monomers.

C) When the contents of the reactor reached a temperature of 81°C, 168 g of the monomer pre-emulsion was introduced in the reactor followed by 2.6 g of NaPS dissolved in 15 g of water.

D) Two minutes after the end of step C), the remaining portion of the monomer pre-emulsion and 388 g of a 5 wt% NaPS solution were fed into the reactor at a constant feed rate, over a period of 5.5 hours, taking care to keep the contents of the reactor at a temperature of 88-92°C throughout the feed.

E) The temperature was maintained at 88-92°C for a further 140 minutes, meanwhile 65 g of a 5 wt% NaPS solution were fed into the reactor at a constant feed rate in 120 min.

F) The temperature was then cooled to 56-60°C and 0.1 g of iron sulfate was added into the reactor.

G) Then, 74 g of a 13 wt% TBHP aqueous solution were fed in 30 min at constant rate, and consecutively 131 g of a 6 wt% FF6 aqueous solution were fed at constant rate in 90 min, while maintaining the reactor at 56-60°C.

H) Twenty minutes after the end of step G), the resulting mixture was cooled to 35°C. The pH was not corrected. The mixture was filtered through a 36 mesh screen. The solids content of the dispersion was set between 55-57 wt%.

Example 2: Preparation of an aqueous dispersion and post-polymerization treatment with ascorbic acid/$H_2O_2$ redox system (comparative)

Steps A) to F) of example 1 were repeated but post-polymerization treatment steps G) and H) were replaced with the following post-polymerization treatment steps G') and H'):

G') Then, 56.6 g of a 35 wt% $H_2O_2$ aqueous solution were fed in 30 min at constant rate, and consecutively 264 g of a 8 wt% AsA aqueous solution were fed at constant rate in 90 min, while maintaining the reactor at 56-60°C.

H') Twenty minutes after the end of step G'), the resulting mixture was cooled to 35°C. The pH was not corrected. The mixture was filtered through a 36 mesh screen. The solids content of the dispersion was set between 55-57 wt%.

Example 3: Preparation of an aqueous dispersion and post-polymerization treatment with tartaric acid/$H_2O_2$ redox system (according to the invention)

Steps A) to E) of example 1 were repeated but post-polymerization steps F), G) and H) were replaced with the following post-polymerization treatment steps F"), G") and H"):

F") The temperature was maintained at 88-92°C and 0.1 g of iron sulfate was added into the reactor.

G") Then, 55 g of a 35 wt% $H_2O_2$ aqueous solution were fed in 30 min at constant rate, and consecutively 32.5 g of TaA dissolved in 125.8 g of water were fed at constant rate in 90 min, while maintaining the reactor at 88-92°C.

H") Twenty minutes after the end of step G"), the resulting mixture was cooled to 35°C. The pH was not corrected. The mixture was filtered through a 36 mesh screen. The solids content of the dispersion was set between 55-57 wt%.

Example 4: Preparation of an aqueous dispersion and post-polymerization treatment with ascorbic acid/$H_2O_2$ redox system (comparative)

An aqueous dispersion of polymer particles was prepared with the following steps A) to G):

A) 1740 g of deionized water and 2.1 g of surfactant A were added in a glass reactor fitted with a condenser, a stirrer, a temperature control system and inlets for nitrogen and the feed solutions.

B) A monomer pre-emulsion was prepared in a separate container fitted with a stirrer (pre-emulsifier). The monomer pre-emulsion was obtained with 1080 g of deionized water, 52.6 g of surfactant A, 63.3 g of surfactant B and 4762 g of a monomeric mixture comprising 30.3 wt% BA, 30.3 wt% 2EHA, 32.2 wt% STY and 4.7 wt% MMA based on the total weight of the mixture of monomers.

C) When the contents of the reactor reached a temperature of 81°C, 168 g of the monomer pre-emulsion was introduced in the reactor followed by 2.6 g of NaPS dissolved in 15 g of water.

D) Two minutes after the end of step C), the remaining portion of the monomer pre-emulsion and 388 g of a 5 wt% NaPS solution were fed into the reactor at a constant feed rate, over a period of 5.5 hours, taking care to keep the contents of the reactor at a temperature of 88-92°C throughout the feed.

E) The temperature was maintained at 88-92°C for a further 140 minutes, meanwhile 65 g of a 5 wt% NaPS solution were fed into the reactor at a constant feed rate in 120 min.

F) The temperature was then cooled to 56-60°C and 0.1 g of iron sulfate was added into the reactor.

G) Then, 33.6 g of a 35 wt% HzOz aqueous solution were fed in 30 min at constant rate, and consecutively 172.3 g of a 8 wt% AsA aqueous solution were fed at constant rate in 90 min, while maintaining the reactor at 56-60°C.

H) Twenty minutes after the end of step G), the resulting mixture was cooled to 35°C. The pH was not corrected. The mixture was filtered through a 36 mesh screen. The solids content of the dispersion was set between 55-57 wt%.

Example 5: Preparation of an aqueous dispersion and post-polymerization treatment with tartaric acid/$H_2O_2$ redox system (according to the invention)

Steps A) to E) of example 4 were repeated but post-polymerization steps F), G) and H) were replaced with the following post-polymerization treatment steps F'), G') and H'):

F') The temperature was maintained at 88-92°C and 0.1 g of iron sulfate was added into the reactor.

G') Then, 33 g of a 35 wt% HzOz aqueous solution were fed in 30 min at constant rate, and 24 g of TaA dissolved in 213 g of water were fed at constant rate in 90 min, while maintaining the reactor at 88-92°C.

H') Twenty minutes after the end of step G'), the resulting mixture was cooled to 35°C. The pH was not corrected. The mixture was filtered through a 36 mesh screen. The solids content of the dispersion was set between 55-57 wt%.

Example 6: Preparation of an aqueous dispersion and post-polymerization treatment with FF6/$H_2O_2$ redox system (comparative)

Steps A) to E) of example 4 were repeated but post-polymerization steps G) and H) were replaced with the following post-polymerization treatment steps G") and H"):

G") Then, 33.6 g of a 35 wt% HzOz aqueous solution were fed in 30 min at constant rate, and consecutively 140 g of a 12 wt% FF6 aqueous solution were fed at constant rate in 90 min, while maintaining the reactor at 56-60°C.

H") Twenty minutes after the end of step G"), the resulting mixture was cooled to 35°C. The pH was not corrected. The mixture was filtered through a 36 mesh screen. The solids content of the dispersion was set between 55-57 wt%.

The ingredients used to obtain the aqueous polymer dispersions of Examples 1-6 are summarized in the table below (amounts are in parts by weight):

| | Ex 1 (Comp) | Ex 2 (Comp) | Ex 3 (Inv) | Ex 4 (Comp) | Ex 5 (Inv) | Ex 6 (Comp) |
|---|---|---|---|---|---|---|
| **Polymerization** | | | | | | |
| BA | | | | 30.3 | 30.3 | 30.3 |
| 2EHA | 58.6 | 58.6 | 58.6 | 30.3 | 30.3 | 30.3 |
| STY | 32.4 | 32.4 | 32.4 | 32.2 | 32.2 | 32.2 |
| BMA | 6.8 | 6.8 | 6.8 | | | |
| MMA | | | | 4.7 | 4.7 | 4.7 |
| NaAMPS | 0.53 | 0.53 | 0.53 | 0.53 | 0.53 | 0.53 |
| HEMA | 0.96 | 0.96 | 0.96 | 0.96 | 0.96 | 0.96 |
| AA | 0.77 | 0.77 | 0.77 | 1.0 | 1.0 | 1.0 |
| Surfactant A | 0.5 | 0.5 | 0.5 | 0.5 | 0.5 | 0.5 |
| Surfactant B | 1.0 | 1.0 | 1.0 | 1.0 | 1.0 | 1.0 |
| Preemulsion for start | 2.8 | 2.8 | 2.8 | 2.8 | 2.8 | 2,8 |
| NaPS for start | 0,054 | 0,054 | 0,054 | 0,054 | 0,054 | 0,054 |
| NaPS for feed 1 | 0.419 | 0.419 | 0.419 | 0.419 | 0.419 | 0.419 |
| NaPS for feed 2 | 0.068 | 0.068 | 0.068 | 0.068 | 0.068 | 0.068 |
| **Post-polymerization treatment** | | | | | | |
| TBHP | 0.20 | | | | | |
| HzOz | | 0.41 | 0.41 | 0.24 | 0.24 | 0.242 |
| FF6 | 0.17 | | | | | 0.355 |
| AsA | | 0.44 | | 0.284 | | |
| TaA | | | 0.68 | | 0.504 | |

Example 7: Characterization of the aqueous polymer dispersions

The features of the aqueous polymer dispersions prepared in accordance with Examples 1 to 6 are summarized in the table 3 below:

| | Ex 1 (Comp) | Ex 2 (Comp) | Ex 3 (Inv) | Ex 4 (Comp) | Ex 5 (Inv) | Ex 6 (Comp) |
|---|---|---|---|---|---|---|
| Particle size (nm) | 207 | 207 | 207 | 215 | 215 | 215 |
| Solids Content (%) | 56.7 | 54.2 | 55.6 | 56.7 | 56.2 | 57.0 |
| pH | 2.0 | 1.8 | 1.8 | 1.8 | 1.9 | 1.9 |
| Total residual monomers (ppm) | 400 | 30 | 30 | 134 | 38 | 93 |
| Tg (°C) | -13 | -13 | -12 | 0 | 0 | 0 |

(continued)

| | Ex 1 (Comp) | Ex 2 (Comp) | Ex 3 (Inv) | Ex 4 (Comp) | Ex 5 (Inv) | Ex 6 (Comp) |
|---|---|---|---|---|---|---|
| Total VOC (ppm) | 1723 | 685 | 984 | 665 | 563 | 692 |

Comparative polymer dispersion comprising TBHP and FF6 as a redox system for the post-polymerization treatment (Ex 1) has higher VOCs and residual monomers compared to the polymer dispersion of the invention (Ex 3). In addition, the aqueous polymer dispersions of the invention (Ex 3 and Ex 5) and the comparative dispersions comprising ascorbic acid instead of tartaric acid (Ex 2 and Ex 4, respectively) have similar Tg, a VOC lower than 1,000 ppm and a content of residual monomers which is the same or lower.

Example 8: Cementitious waterproofing coating compositions

Cementitious waterproofing coatings were prepared with the aqueous polymer dispersions of Examples 1-6 according to method described above. The ingredients are listed in the table below:

| | | Parts by weight |
|---|---|---|
| **Hydraulic Binder** | | |
| Cement | Portland cement (from Alfix A/S, Denmark) | 100.0 |
| **Polymeric binder** | | |
| Polymer | Aqueous polymer dispersion of Example 1-6 (55.0 wt% solids) | 125.5 |
| Water | Deionized water | 2.5 |
| Anti-foam additive | TEGO Airex 902 W (polyether siloxane emulsion) | 0.3 |
| **Total** | | 228.3 |

Example 9: Applicative results

The features of the cementitious waterproofing coatings are reported in the table below.

| | Ex 9-1 (Comp) | Ex 9-2 (Comp) | Ex 9-3 (Inv) | Ex 9-4 (Comp) | Ex 9-5 (Inv) | Ex 9-6 (Comp) |
|---|---|---|---|---|---|---|
| Aqueous polymer dispersion used to prepare the cementitious waterproofing coating | Ex 1 | Ex 2 | Ex 3 | Ex 4 | Ex 5 | Ex 6 |
| Dry tensile strength at break (MPa) | 0.32 | 0.36 | 0.34 | 1.72 | 1.51 | 1.14 |
| Dry elongation at break (%) | 300 | 250 | 300 | 315 | 330 | 470 |
| 7 days water absorption (%) | 7.7 | 7.3 | 7.1 | 8.6 | 7.8 | 9.8 |
| 21 days water absorption (%) | 16.6 | 14.3 | 12.9 | 19.3 | 17.9 | 21.4 |
| 21 day wet tensile strength at break (MPa) | 0.29 | 0.28 | 0.26 | 0.54 | 0.51 | 0.53 |
| 21 day wet elongation at break (%) | 150 | 245 | 335 | 530 | 405 | 420 |
| Tackiness (N) | 11.1 | 8.8 | 6.5 | 4.0 | 2.6 | 2.6 |

The cementitious waterproofing coatings obtained with the aqueous polymer dispersions of the invention (Ex 9-3 and Ex 9-5) exhibit lower tackiness, lower 21-day water absorption and still good mechanical properties, compared to similar coatings prepared from polymer dispersions obtained using HzOz/ascorbic acid as the redox system (Ex 9-2 and 9-4). These mechanical and applicative properties are also much greater than comparative membranes prepared from polymer dispersions obtained using the conventional TBHP/FF6 redox system (Ex 9-1).

In addition, Comp Ex 9-6 shows that this improved balance of properties cannot be obtained by $H_2O_2$/FF6 as the redox system, since water absorption remains too high in this comparative experiment.

## Claims

1. A composition comprising:

   A) an aqueous polymer dispersion; and
   B) a hydraulic binder;

   wherein the aqueous polymer dispersion is obtained by emulsion polymerization of a monomeric composition comprising:

   - ethylenically unsaturated monomers;
   - at least one surfactant; and
   - at least one initiator;

   and the aqueous polymer dispersion comprises a residue of a reducing agent selected from polyunsaturated carboxylic acids, hydroxylated carboxylic acids and mixtures thereof.

2. The composition according to claim 1, wherein the reducing agent is selected from tartaric acid, sorbic acid, glycolic acid and mixtures thereof, particularly tartaric acid.

3. The composition according to claim 1 or 2, wherein the ethylenically unsaturated monomers comprise monomer a) which comprises one or more C1-C12 alkyl (meth)acrylates, in particular a mixture of at least one C4-C12 alkyl acrylate and at least one C1-C4 alkyl methacrylate.

4. The composition according to any one of claims 1 to 3, wherein the ethylenically unsaturated monomers comprise monomer b) which comprises one or more vinyl aromatic monomers, in particular styrene.

5. The composition according to any one of claims 1 to 4, wherein the ethylenically unsaturated monomers comprise monomer c) which comprises one or more ethylenically unsaturated monomers bearing a hydroxyl group, in particular a hydroxyalkyl (meth)acrylate.

6. The composition according to any one of claims 1 to 5, wherein the ethylenically unsaturated monomers comprise monomer d) which comprises one or more ethylenically unsaturated monomers bearing an acidic group, in particular an acidic monomer d1) selected from mono- or dicarboxylic acid monomers, cyclic anhydride monomers and salts thereof, an acidic monomer d2) selected from the group consisting of phosphorous-based (P-based) and sulfur-based (S-based) acidic monomers, or a mixture of d1) and d2).

7. The composition according to any one of claims 1 to 6, wherein the monomeric composition comprises:

   - 50 to 80%, preferably 60 to 70%, of monomer a) which is preferably selected from n-butyl (meth)acrylate, 2-ethylhexyl acrylate, methyl methacrylate and mixtures thereof;
   - 15 to 45%, preferably 25 to 35%, of monomer b) which is preferably styrene;
   - 0.1 to 5%, preferably 0.3 to 2%, of monomer c) which is preferably 2-hydroxyethyl (meth)acrylate;
   - 0.1 to 5%, preferably 0.3 to 2% of monomer d) which is preferably selected from (meth)acrylic acid, 2-acrylamido-2-methyl-1-propanesulfonic acid sodium salt and mixtures thereof;

   wherein the % are by weight based on the total weight of the ethylenically unsaturated monomers.

8. The composition according to any one of claims 1 to 7, wherein the polymer particles exhibit a glass transition temperature (Tg) of -40 to 30°C, in particular -30 to 25°C, more particularly -20 to 20°C, even more particularly -20 to 5°C.

9. The composition according to any one of claims 1 to 8, wherein the hydraulic binder comprises cement, fly ash, blast furnace slag, lime, plaster, pozzolan or mixtures thereof, preferably cement.

**10.** A process for the preparation of a composition comprising the following steps:

iv) preparing an aqueous polymer dispersion by emulsion polymerization of a monomeric composition comprising

- ethylenically unsaturated monomers;
- at least one surfactant; and
- at least one initiator;

v) adding a chase to the aqueous polymer dispersion obtained in step i) as a post-polymerization treatment,
vi) mixing the aqueous polymer dispersion obtained in step ii) with a hydraulic binder;

wherein the initiator of step i) and/or the chase of step ii) comprises a redox system comprising a peroxide and a reducing agent selected from polyunsaturated carboxylic acids, hydroxylated carboxylic acids and mixtures thereof.

**11.** The process according to claim 10, wherein the reducing agent is selected from tartaric acid, sorbic acid, glycolic acid and mixtures thereof, in particular tartaric acid.

**12.** The process according to claim 10 or 11, wherein the peroxide is selected from a persulfate, hydrogen peroxide, an organic hydroperoxide, a peracid, and mixtures thereof, in particular hydrogen peroxide.

**13.** A use of the composition according to any one of claims 1 to 9 in the preparation of a composite material, preferably selected from a coating, an adhesive, a mortar, a putty or a sealant, more preferably a cementitious waterproofing coating.

**14.** A composite material, preferably selected from a coating, an adhesive, a mortar, a putty or a sealant, more preferably a cementitious waterproofing coating, obtained with the composition according to any one of claims 1 to 9.

**15.** A use of a redox system for increasing the impermeability and/or reducing the tackiness of a composite material obtained from an aqueous polymer dispersion and a hydraulic binder, wherein the redox system comprises a peroxide and a reducing agent selected from polyunsaturated carboxylic acids, hydroxylated carboxylic acids and mixtures thereof.

Europäisches Patentamt
European Patent Office
Office européen des brevets

# EUROPEAN SEARCH REPORT

Application Number
EP 22 30 7054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 708 312 A (CHINA PETROLEUM & CHEM CORP ET AL.) 27 April 2021 (2021-04-27)<br>* claim 1 *<br>* examples 10,11,12 *<br>----- | 1,2,9-14 | INV.<br>C08F220/38<br>C08L33/06<br>C08F6/00 |
| X | US 2020/277421 A1 (CHEN HAIMING [CN] ET AL) 3 September 2020 (2020-09-03)<br>* claims 1,17,18 *<br>* example 1; table 2 *<br>* table 9 *<br>* paragraph [0083] *<br>* example 3; table 4 *<br>----- | 1,3-10, 12-15 | |
| A | US 6 444 760 B1 (RUPANER ROBERT [DE] ET AL) 3 September 2002 (2002-09-03)<br>* claims 1,5 *<br>----- | 1-15 | |

TECHNICAL FIELDS SEARCHED (IPC)

C08F

The present search report has been drawn up for all claims

1

| Place of search | Date of completion of the search | Examiner |
|---|---|---|
| The Hague | 13 June 2023 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 30 7054

This annex lists the patent family members relating to the patent documents cited in the above-mentioned European search report. The members are as contained in the European Patent Office EDP file on
The European Patent Office is in no way liable for these particulars which are merely given for the purpose of information.

13-06-2023

| Patent document cited in search report | Publication date | Patent family member(s) | Publication date |
|---|---|---|---|
| CN 112708312 A | 27-04-2021 | NONE | |
| US 2020277421 A1 | 03-09-2020 | CN 111356707 A | 30-06-2020 |
| | | EP 3713973 A1 | 30-09-2020 |
| | | ES 2929745 T3 | 01-12-2022 |
| | | US 2020277421 A1 | 03-09-2020 |
| | | WO 2019100235 A1 | 31-05-2019 |
| US 6444760 B1 | 03-09-2002 | AU 9541198 A | 05-04-1999 |
| | | BR 9812464 A | 19-09-2000 |
| | | DE 19741187 A1 | 25-03-1999 |
| | | EP 1023335 A1 | 02-08-2000 |
| | | JP 2001516775 A | 02-10-2001 |
| | | US 6444760 B1 | 03-09-2002 |
| | | WO 9914249 A1 | 25-03-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200277421 A
- US 20180179108 A
- US 6423805 B
- US 20170226013 A
- US 20180327310 A
- WO 02092637 A
- WO 2018184852 A

### Non-patent literature cited in the description

- *Encyclopedia of Polymer Science and Engineering,* 1987, vol. 8, 659
- **P. KUMAR MEHTA et al.** Concrete - Microstructure, Properties, & Materials. 220
- Full Evaporation Head Space Gas Chromatographic Technique for the Determination of Residual Monomers and VOC in Polymer Dispersion. *International Journal of Polymer Analysis and Characterization,* 2003, vol. 8 (5